# EUROPÄISCHE PATENTSCHRIFT

(11) **EP 1 562 064 B1**
(45) Veröffentlichungstag und Bekanntmachung des Hinweises auf die Patenterteilung: **22.10.2008**
(21) Anmeldenummer: 05001767.2
(22) Anmeldetag: 28.01.2005
(51) Int. Cl.: G02B 23/16, G03B 11/04

(54) **Umklappbare Augenmuschel**
Foldable eye cup
Bonnet oculaire rabattable

(30) Priorität: 05.02.2004 DE 202004001705 U
(43) Veröffentlichungstag der Anmeldung: 10.08.2005
(73) Patentinhaber: Steiner -Optik GmbH, 95448 Bayreuth (DE)
(72) Erfinder: Fischbach, Manfred, 95502 Himmelkron (DE); Steiner, Carl, 95463 Bindlach (DE)
(74) Vertreter: Schneck, Herbert

(56) Entgegenhaltungen:
- EP-A- 1 116 979
- DD-A1- 243 126
- GB-A- 526 605
- US-A- 5 784 207
- PATENT ABSTRACTS OF JAPAN Bd. 1995, Nr. 05, 30. Juni 1995 (1995-06-30) -& JP 07 043616 A (CANON INC), 14. Februar 1995 (1995-02-14)

## Beschreibung

Die Erfindung betrifft eine Augenmuschel für ein Okular eines optischen Beobachtungsgerätes
- mit einer Begrenzungswand umfassend
   -- einen Okular-Verbindungsabschnitt zur Verbindung der Augenmuschel mit einem Okular,
   -- einen Zwischenabschnitt, der sich an den Okular-Verbindungsabschnitt anschließt,
   -- einen Lichtschutzansatz, der mit der dem Okular-Verbindungsabschnitt abgewandten Seite des Zwischenabschnitts über einen Teilabschnitt des Zwischenabschnitts verbunden ist,
- mit einer Seh-Öffnung, die durch die Begrenzungswand seitlich begrenzt ist,
- wobei die Begrenzungswand bringbar ist,
   -- in eine erste nicht-geklappte End-Stellung für Nichtbrillenträger zur Verhinderung von Störlicht-Einfall auf eine Okularlinse und
   -- in eine zweite umgeklappte End-Stellung für Brillenträger.

Eine derartige Augenmuschel ist beispielsweise aus der DD 243 126 A1 bekannt. Für Brillenträger wird die Augenmuschel in Richtung Okular umgestülpt. Für Nichtbrillenträger erfolgt keine Umstülpung der Augenmuschel, so dass für Nichtbrillenträger ein in vielen Fällen erforderliches Arbeiten mit seitlichem Lichtschutz realisierbar ist. Bei der Benutzung des mit der Augenmuschel in Verbindung stehenden optischen Beobachtungsgeräts durch einen Nichtbrillenträger in der nicht-umgestülpten Stellung der Augenmuschel entsteht ein Zwischenraum, der durch eine Okularlinse, die Augenmuschel und das Gesicht des Benutzers nahezu luftdicht gegenüber der Umgebung abgeschlossen ist. Dies hat zur Folge, dass die Temperatur in diesem Zwischenraum während der Benutzung des optischen Beobachtungsgerätes allmählich ansteigt, was ein Beschlagen der Okularlinse zur Folge hat. Durch das Beschlagen der Okularlinse wird die Benutzung des Okulars und somit auch des mit dem Okular in Verbindung stehenden optischen Beobachtungsgerätes erheblich beeinträchtigt.

Aus der US 5,784,207 ist eine weitere Augenmuschel für ein optisches Beobachtungsgerät bekannt, die als ganze in verschiedene Stellungen verschiebbar ist. Durch die Verschiebung der Augenmuschel ist eine Anpassung an Brillenträger und Nichtbrillenträger möglich.

Hiervon ausgehend liegt der Erfindung die Aufgabe zu Grunde, eine Augenmuschel für ein Okular eines optischen Beobachtungsgerätes derart auszugestalten, dass eine Benutzung des optischen Beobachtungsgerätes ohne Beeinträchtigung sowohl für Nichtbrillenträger als auch für Brillenträger möglich ist.

Diese Aufgabe wird erfindungsgemäß dadurch gelöst, dass die Begrenzungswand außerdem in eine zwischen der ersten und der zweiten End-Stellung gelegene dritte stabile Belüftungs-Stellung für Nichtbrillenträger zur Verhinderung eines Okularlinsen-Beschlags bringbar ist, wobei der Lichtschutzansatz eine Versteifungswulst zur Bildung einer kontrolliert verlaufenden Umklappkante für die dritte stabile Belüftungs-Stellung aufweist. Der Kern der Erfindung besteht darin, dass in dieser dritten stabilen Belüftungsstellung eine Strömungsverbindung für Luft zwischen der Umgebung und einem Zwischenraum existiert, der durch das Gesicht eines Benutzers, durch die Augenmuschel und durch eine Okularlinse gebildet ist. Durch diese Strömungsverbindung wird ein Temperaturanstieg und somit ein Beschlagen der Okularlinse bei der Benutzung durch einen Nichtbrillenträger verhindert. Das Umklappen erfolgt kontrolliert.

In weiterer Ausgestaltung der Erfindung ist vorteilhafter Weise vorgesehen, dass die Begrenzungswand aus einem flexiblen Kunststoffmaterial oder Gummimaterial besteht. Diese Materialien ermöglichen ein einfaches Umstülpen der Begrenzungswand in die entsprechende Stellung.

Gemäß einer vorteilhaften Ausgestaltung ist die Begrenzungswand für die zweite umgeklappte End-Stellung im Bereich des Zwischenabschnitts umklappbar. Dies hat zur Folge, dass in der zweiten umgeklappten End-Stellung eine Brillen-Anlagekante vorliegt, die sich in einer Ebene erstreckt.

Es ist zweckmäßig, dass die Begrenzungswand für die dritte stabile Belüftungs-Stellung im Bereich des Lichtschutzansatzes umklappbar ist. Es liegt in der dritten Belüftungs-Stellung eine Strömungsverbindung zwischen der Umgebung und dem vorgenannten Zwischenraum vor. Hierdurch wird eine Belüftung des Zwischenraums ermöglicht.

Eine weitere vorteilhafte Ausgestaltung zeichnet sich dadurch aus, dass eine in der dritten stabilen Belüftungs-Stellung vorliegende freie Anlagekante nicht in einer Ebene verläuft.

Vorteilhafter Weise ist eine Anlagewulst an dem freien Ende der Begrenzungswand vorgesehen.

Es ist von großem Vorteil, wenn die Begrenzungswand einstückig ist. Hierdurch wird eine kostengünstige Herstellung erzielt.

Nachfolgend wird die Erfindung an Hand eines bevorzugten Ausführungsbeispieles in Verbindung mit der Zeichnung näher beschrieben. Dabei zeigen:
- Fig. 1: eine perspektivische Ansicht einer an einem Okular befestigten Augenmuschel, deren Begrenzungswand sich in einer nicht-geklappten End-Stellung befindet;
- Fig. 2: die in Fig. 1 dargestellte Augenmuschel, deren Begrenzungswand sich in der Belüftungs-Stellung befindet und
- Fig. 3: die in den Figuren 1 und 2 dargestellte Augenmuschel, deren Begrenzungswand sich in der zweiten umgeklappten End-Stellung befindet.

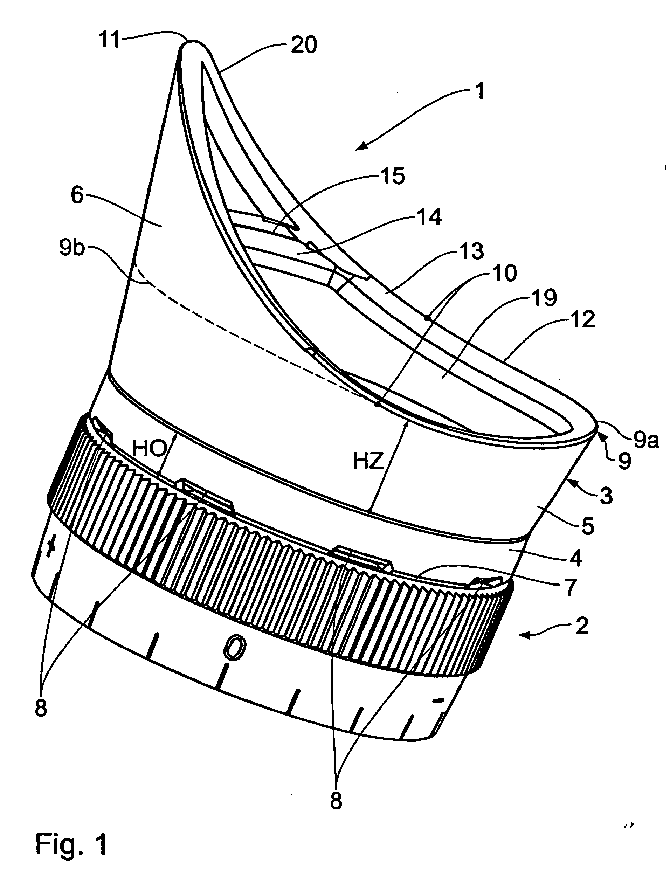

Eine in den Figuren 1 bis 3 dargestellte Augenmuschel 1 ist an einem Okular 2 eines optischen Beobachtungsgerätes angebracht. Bei dem optischen Beobachtungsgerät kann es sich beispielsweise um ein Mikroskop, Fernglas oder Fernrohr handeln.

Die Augenmuschel 1 besteht aus einer einstückigen Begrenzungswand 3, die aus flexiblem Kunststoffmaterial oder Gummimaterial gebildet ist. Die Begrenzungswand 3 umfasst einen an das Okular 2 angrenzenden Okular-Verbindungsabschnitt 4 zur Verbindung der Augenmuschel 1 mit dem Okular 2, einen sich an den Okular-Verbindungsabschnitt 4 anschließenden Zwischenabschnitt 5 und einen Lichtschutzansatz 6, der mit der dem Okular-Verbindungsabschnitt 4 abgewandten Seite des Zwischenabschnitts 5 verbunden ist. Der Lichtschutzansatz 6 ist dabei lediglich über einen Teilumfang des Zwischenabschnitts 5 mit diesem verbunden. Die Begrenzungswand 3 begrenzt seitlich eine Seh-Öffnung 19, die oberhalb einer Okularlinse (nicht dargestellt) liegt.

Der Okular-Verbindungsabschnitt 4 erstreckt sich von einem an das Okular 2 angrenzenden unteren freien Rand 7 der Begrenzungswand 3 über eine Höhe HO und ist im Querschnitt kreisringförmig ausgebildet. Er weist außerdem einen im Wesentlichen konstanten Außen- und Innendurchmesser auf. In dem Okular-Verbindungsabschnitt 4 sind Luft-Durchtrittsöffnungen 8 vorgesehen, die von dem freien Rand 7 aus in Richtung auf den Zwischenabschnitt 5 verlaufen. Die Luft-Durchtrittsöffnungen 8 befinden sich somit oberhalb des Okulars 2. Durch die Luft-Durchtrittsöffnungen 8 tritt Luft von außen in Strömungskanäle (nicht dargestellt) ein, die die Luft auf die in dem Okular 2 angeordnete Okularlinse führen, so dass diese beschlagfrei gehalten wird. Der in den Strömungskanälen geführte Luftstrom wird umgelenkt. Hierdurch wird erreicht, dass durch die Luft-Durchtrittsöffnungen 8 kein Licht eindringen kann und der Luftstrom nicht direkt auf das Auge trifft.

Der Zwischenabschnitt 5 weist eine im Wesentlichen konstante Höhe auf, nämlich die Höhe HZ. Die Höhe HZ ist ungefähr doppelt so hoch wie die Höhe HO des Okular-Verbindungsabschnitts 4. Der Zwischenabschnitt 5 erstreckt sich von dem Okular-Verbindungsabschnitt 4 bis zu einem Endabschnitt 9. Außerhalb des Lichtschutzansatzes 6 bildet der Endabschnitt 9 einen freien Rand 9a der Begrenzungswand 3. In Fig. 1 ist der Verlauf des Endabschnitts 9 des Zwischenabschnitts 5 im Bereich des Lichtschutzansatzes 6 gestrichelt eingezeichnet. In diesem Bereich ist dem Endabschnitt 9 das Bezugszeichen 9b zugeordnet. Der Zwischenabschnitt 5 weist ebenfalls einen kreisringförmigen Querschnitt auf, verläuft aber konisch, d. h. der Zwischenabschnitt 5 erstreckt sich von dem Okular-Verbindungsabschnitt 4 nach oben außen.

Außerhalb des Lichtschutzansatzes 6 weist die Begrenzungswand 3 eine konstante Höhe auf, die sich aus den Höhen HO und HZ zusammensetzt.

Der mit dem Zwischenabschnitt 5 in Verbindung stehende gekrümmte Lichtschutzansatz 6 erstreckt sich ungefähr über den halben Umfang des Zwischenabschnitts 5. Er verläuft von dem Endabschnitt 9b nach oben außen. Die Höhe des Lichtschutzansatzes 6 nimmt ausgehend von dessen beiden seitlichen Enden 10 allmählich zu und erreicht ihr Maximum an dem Punkt 11, der ungefähr mittig zwischen den beiden Enden 10 liegt.

Ein dem unteren freien Rand 7 abgewandter oberer freier Rand 12 der Begrenzungswand 3 wird durch den freien Rand 9a des Zwischenabschnitts 5 und den freien Rand 20 des Lichtschutzansatzes 6 gebildet. Eine Anlagewulst 13 zur Anlage an das Gesicht eines Benutzers verläuft entlang des freien Randes 12. Der Okular-Verbindungsabschnitt 4, der Zwischenabschnitt 5 und der Lichtschutzansatz 6 weisen eine im Wesentliche einheitliche Dicke auf.

Auf der Innenseite des Lichtschutzansatzes 6 ist eine Versteifungswulst 14 vorgesehen, die mit der Anlagewulst 13 in Verbindung steht. Die Versteifungswulst 14 verläuft oberhalb des Endabschnitts 9 des Zwischenabschnitts 5 und unterhalb des Punktes 11. Die Versteifungswulst 14 gibt den Verlauf einer Umklappkante 15 für die dritte stabile Belüftungs-Stellung vor und verläuft ungefähr parallel zu dem freien Rand 7, zu welchem außerdem der freie Endabschnitt 9 parallel ist.

Die in Fig. 1 dargestellte erste nichtgeklappte End-Stellung ist für Nichtbrillenträger vorgesehen. Der seitliche Lichtschutzansatz 6 verhindert dabei einen Störlicht-Einfall auf eine Okularlinse. Die Begrenzungswand 3 weist im Anlagebereich eine Konfiguration auf, welche dem Verlauf um das menschliche Auge folgt. Die Anlagewulst 13 ist an das Gesicht eines Benutzers anzulegen.

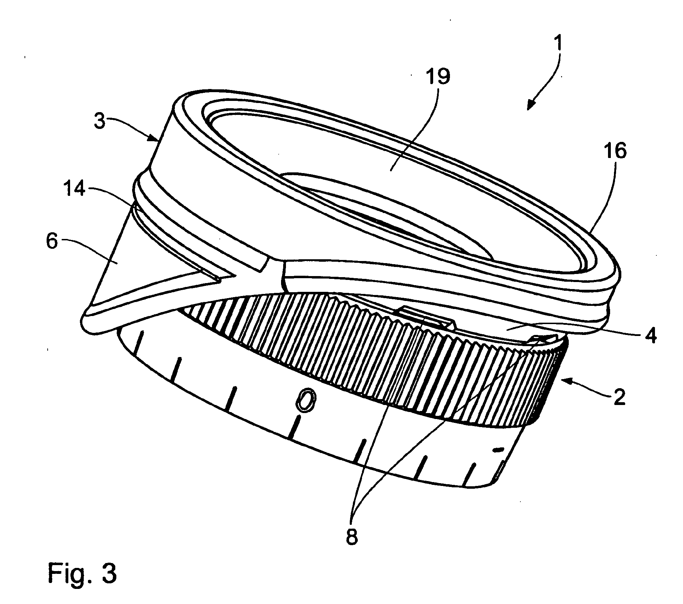

Die zweite umgeklappte End-Stellung, die in Fig. 3 dargestellt ist, ist für Brillenträger vorgesehen. Die Begrenzungswand 3 ist dabei im Zwischenabschnitt 5 umgeklappt. Die durch das Umklappen gebildete Brillen-Anlagekante 16 zur Anlage an ein Brillenglas eines Benutzers verläuft in einer Ebene und kann somit dem Brillenglas des Benutzers folgen. Die Brillen-Anlagekante 16 ist parallel zu dem freien Rand 7. Die Begrenzungswand 3 ist vorzugsweise ungefähr auf halber Höhe zwischen dem freien Rand 7 und dem Endabschnitt 9 umgeklappt. Um ein kontrolliertes Umklappen zu ermöglichen, kann in dem Zwischenabschnitt 5 eine Versteifungswulst oder eine Materialschwächung vorgesehen sein.

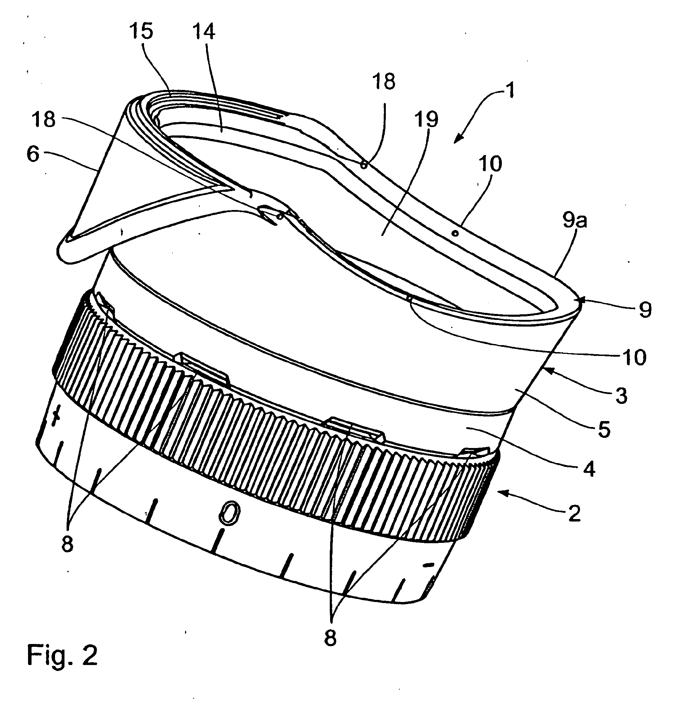

Die in Fig. 2 dargestellte dritte stabile Belüftungs-Stellung ist für Nichtbrillenträger vorgesehen. Die Versteifungswulst 14 gibt einen genauen Verlauf der Umklappkante 15 vor. Der Verlauf der Umklappkante 15 wird wegen der Versteifungswulst 14 nicht durch geringe aus der Anlage an das Gesicht des Benutzers resultierende Kräfte beeinflusst. Wie bereits erwähnt, verläuft die Umklappkante 15 oberhalb des Endabschnitts 9. Auch in der Belüftungs-Stellung liegt somit ein seitlicher Lichtschutz für Nichtbrillenträger vor. Es entsteht eine Belüftungsöffnung, die sich ungefähr zwischen der Umklappkante 15 und der Schläfe eines Nichtbrillenträgers erstreckt. Die Belüftungsöffnung verläuft somit benachbart zu der Umklappkante 15. Sie erstreckt sich zwischen den Punkten 18, die ungefähr bei den Schnittpunkten zwischen Anlagewulst 13 und Versteifungswulst 14 liegen. Der freie Rand 9a ist mit dem Gesicht eines Benutzers in Anlage zu bringen und bildet in der Belüftungs-Stellung eine Anlagekante zur Anlage an das Gesicht eines Benutzers. Der freie Rand 9a und die Umklappkante 15 verlaufen ungefähr parallel zueinander. Wie aus Fig. 2 ersichtlich ist, liegt der umgeklappte Lichtschutzansatz 6 an der Außenseite des Zwischenabschnitts 5 an.

## Patentansprüche

1. Augenmuschel für ein Okular eines optischen Beobachtungsgerätes
a) mit einer Begrenzungswand (3) umfassend
i) einen Okular-Verbindungsabschnitt (4) zur Verbindung der Augenmuschel mit einem Okular (2),
ii) einen Zwischenabschnitt (5), der sich an den Okular-Verbindungsabschnitt (4) anschließt,
iii) einen Lichtschutzansatz (6), der mit der dem Okular-Verbindungsabschnitt (4) abgewandten Seite des Zwischenabschnitts (5) über einen Teilabschnitt des Zwischenabschnitts (5) verbunden ist,
b) mit einer Seh-Öffnung (19), die durch die Begrenzungswand (3) seitlich begrenzt ist,
c) wobei die Begrenzungswand (3) bringbar ist
i) in eine erste nicht-geklappte End-Stellung für Nichtbrillenträger zur Verhinderung von Störlicht-Einfall auf eine Okularlinse und
ii) in eine zweite umgeklappte End-Stellung für Brillenträger,
**dadurch gekennzeichnet, dass**
d) die Begrenzungswand (3) außerdem in eine zwischen der ersten und der zweiten End-Stellung gelegene dritte stabile Belüftungs-Stellung für Nichtbrillenträger zur Verhinderung eines Okularlinsen-Beschlags bringbar ist,
e) der Lichtschutzansatz (6) eine Versteifungswulst (14) zur Bildung einer kontrolliert verlaufenden Umklappkante (15) für die dritte stabile Belüftungs-Stellung aufweist.

2. Augenmuschel nach Anspruch 1, **dadurch gekennzeichnet, dass** die Begrenzungswand (3) aus einem flexiblen Kunststoffmaterial oder Gummimaterial besteht.

3. Augenmuschel nach Anspruch 1 oder 2, **dadurch gekennzeichnet, dass** die Begrenzungswand (3) für die zweite umgeklappte End-Stellung im Bereich des Zwischenabschnitts (5) umklappbar ist.

4. Augenmuschel nach einem der Ansprüche 1 bis 3, **dadurch gekennzeichnet, dass** die Begrenzungswand (3) für die dritte stabile Belüftungs-Stellung im Bereich des Lichtschutzansatzes (6) umklappbar ist.

5. Augenmuschel nach Anspruch 1, **dadurch gekennzeichnet, dass** eine in der dritten stabilen Belüftungs-Stellung vorliegende freie Anlagekante (9a, 15) nicht in einer Ebene verläuft.

6. Augenmuschel nach einem der Ansprüche 1 bis 5, **dadurch gekennzeichnet, dass** eine Anlagewulst (13) an dem freien Ende der Begrenzungswand (3) vorgesehen ist.

7. Augenmuschel nach einem der Ansprüche 1 bis 6, **dadurch gekennzeichnet, dass** die Begrenzungswand (3) einstückig ist.

## Claims

1. Cup for an eyepiece of an optical observation instrument, comprising
a) a peripheral wall (3) which includes
i) an eyepiece-connecting section (4) for connection of the eyepiece cup to an eyepiece (2),
ii) a transition section (5) which adjoins the eyepiece-connecting section (4),
iii) a light-protecting attachment (6) which, by way of a sectional part of the transition section (5), is joined to a side of the transition section (5) remote from the eyepiece-connecting section (4);
b) a sight hole (19) which is laterally defined by the peripheral wall (3);
c) the peripheral wall (3) being movable
i) into a first non-folded end position for someone who does not wear spectacles to prevent any incidence of stray light upon an eyepiece lens, and
ii) into a second folded end position for spectacle wearers;
d) **characterised in that**
the peripheral wall (3) is movable into a third stable position of ventilation, located between the first and the second end position, for someone not wearing spectacles for preclusion of any fogging of the eyepiece lens.
e) the light-protecting attachment (6) comprises a reinforcing bead (14) for production of a fold-down edge (15) of controlled extension.

2. Eyepiece cup according to claim 1, **characterised in that** the peripheral wall (3) consists of flexible plastic material or rubber material.

3. Eyepiece cup according to claim 1 or 2, **characterised in that,** for the second folded end position, the peripheral wall (3) is foldable in the vicinity of the transition section (5).

4. Eyepiece cup according to one of claims 1 to 3, **characterised in that,** for the third stable position of ventilation, the peripheral wall (3) is foldable in the vicinity of the light-protecting attachment (6).

5. Eyepiece cup according to claim 1, **characterised in that** a free contact edge (9a, 15) exists in the third stable position of ventilation and does not extend in one plane.

6. Eyepiece cup according to one of claims 1 to 5, **characterised in that** a contact bead (13) is provided on the free end of the peripheral wall (13).

7. Eyepiece cup according to one of claims 1 to 6, **characterised in that** the peripheral wall (3) is formed in one piece.

## Revendications

1. Bonnet oculaire pour l'oculaire d'un appareil d'observation optique
a) doté d'une paroi de délimitation (3) comportant
i) une section de liaison d'oculaire (4) destinée à relier le bonnet oculaire à un oculaire (2),
ii) une section intermédiaire (5), qui se raccorde à la section de liaison d'oculaire (4),
iii) une saillie de protection contre la lumière (6), qui est reliée à la face de la section intermédiaire (5) opposée à la section de liaison d'oculaire (4) par une section partielle de la section intermédiaire (5),
b) doté d'une ouverture visuelle (19), qui est délimitée latéralement par la paroi de délimitation (3),
c) la paroi de délimitation (3) pouvant être amenée
i) dans une première position finale non rabattue pour les personnes ne portant pas de lunettes afin d'empêcher une incidence de lumière parasite sur une lentille d'oculaire et
ii) dans une seconde position finale rabattue pour les personnes portant des lunettes,
**caractérisé en ce que**
d) la paroi de délimitation (3) peut en outre être amenée dans une troisième position d'aération stable placée entre la première position finale et la deuxième position finale pour les personnes ne portant pas de lunettes afin d'empêcher un embuage de la lentille oculaire,
e) la saillie de protection contre la lumière (6) comprend un bourrelet de renforcement (14) destiné à former une arête de rabattement (15) s'étendant de façon contrôlée pour la troisième position d'aération stable.

2. Bonnet oculaire selon la revendication 1, **caractérisé en ce que** la paroi de délimitation (3) est constituée d'une matière plastique flexible ou d'un matériau en caoutchouc.

3. Bonnet oculaire selon la revendication 1 ou 2, **caractérisé en ce que** la paroi de délimitation (3) pour la deuxième position finale rabattue peut être rabattue dans la zone de la section intermédiaire (5).

4. Bonnet oculaire selon l'une quelconque des revendications 1 à 3, **caractérisé en ce que** la paroi de délimitation (3) pour la troisième position d'aération stable peut être rabattue dans la zone de la saillie de protection contre la lumière (6).

5. Bonnet oculaire selon la revendication 1, **caractérisé en ce qu'**une arête de butée libre (9a, 15) présente dans la troisième position d'aération stable ne s'étend pas dans un plan.

6. Bonnet oculaire selon l'une quelconque des revendications 1 à 5, **caractérisé en ce qu'**un bourrelet de butée (13) est prévu sur l'extrémité libre de la paroi de délimitation (3).

7. Bonnet oculaire selon l'une quelconque des revendications 1 à 6, **caractérisé en ce que** la paroi de délimitation (3) est en une seule pièce.
